# EUROPEAN PATENT SPECIFICATION

(11) **EP 2 647 319 B1**
(45) Date of publication and mention of the grant of the patent: **15.07.2015**
(21) Application number: 11844365.4
(22) Date of filing: 23.11.2011
(51) Int. Cl.: A47J 31/44, A47J 31/36

(54) **HIGH PRESSURE COFFEE MACHINE SEALING MECHANISM**
DICHTUNGSMECHANISMUS FÜR EINE HOCHDRUCK-KAFFEEMASCHINE
MÉCANISME D'ÉTANCHÉITÉ DE MACHINE À CAFÉ À HAUTE PRESSION

(30) Priority: 30.11.2010 CN 201020635733 U
(43) Date of publication of application: 09.10.2013
(73) Proprietor: Tsann Kuen (Zhangzhou) Enterprise Co., Ltd., Fujian 363000 (CN)
(72) Inventor: ZHONG, Weijun, Zhangzhou Fujian 363000 (CN); DENG, Hongshuai, Zhangzhou Fujian 363000 (CN)
(74) Representative: Verscht, Thomas Kurt Albert
(86) International application number: PCT/CN2011/082662
(87) International publication number: WO 2012/071997

(56) References cited:
- EP-A1- 0 862 882
- EP-A1- 0 904 718
- EP-A1- 1 000 574
- EP-A1- 1 767 129
- WO-A1-2006/005755
- CN-U- 201 996 325
- CN-Y- 2 851 147
- CN-Y- 201 026 130
- CN-Y- 201 192 274
- CN-Y- 201 356 448
- US-A1- 2006 225 583
- US-A1- 2007 039 478

## Description

### FIELD OF THE INVENTION

The present invention relates to a seal mechanism of high pressure coffee machine.

### BACKGROUND OF THE INVENTION

The high pressure coffee machine at the prior art can be used for extracting and making coffee bag and coffee capsule, and its seal mechanism comprises the lower body and the upper cover, and the lower body and the upper cover are pivotally connected together. A coffee box with upward opening is arranged above the lower body, and a sealing piece is arranged below the upper cover, and the sealing piece and the coffee box opening are coupling with each other. And a hook mechanism is arranged between the lower body and the upper cover. Because only a hook mechanism is arranged between the upper cover and the lower body, the sealing force between the sealing piece and the coffee box is bear by the hook mechanism, the sealing performance is not good, and the sealing performance can be damaged by the shake during the high pressure extraction process. State of the art documents are WO 2006/005755, EP 1 000 574, US 2007/039478, EP 0 862 882, EP 0 904 718, EP 1 767 129.

### SUMMARY OF THE INVENTION

The object of the present invention is to offer a seal mechanism of high pressure coffee machine which overcomes the defect at the prior art.

The technical proposal solving the technical matter in the present invention is:

A seal mechanism of high pressure coffee machine, comprises an upper cover (100), a rotary cover (200) and a lower body (300), the back end of the upper cover (100), the back end of the rotary cover (200) and the back of the lower body (300) are pivotally connected together, a coffee box (310) with upward opening is arranged on the lower body (300), and a sealing piece (210) that can adaptively cover the opening of the coffee box (310) is arranged under the rotary cover (200);

The hook mechanism is arranged between the upper cover (100) and the lower body (300);

The closing mechanism is arranged between the upper cover (100) and the rotary cover (200), which comprises the handle (120), the closing piece (130) and the opening and closing rod (140); the handle(120) is moveably connected to the upper cover (100), the closing piece (130) and the handle (120) form an interlock connection relationship and are against above the rotary cover (200), and the opening and closing rod (140) and the handle (120) form a interlock connection relationship to adaptive to the hook mechanism.

In a preferred embodiment, the closing piece (130) is a cam, and the cam and the handle (120) form a synchronous coaxial rotation connection relationship, and the peripheral surface of the cam is against the rotary cover (200).

In a preferred embodiment, the opening and closing rod (140) and the handle (120) form a synchronous coaxial rotation connection relationship.

In a preferred embodiment, the hook mechanism comprises the hook (110) and the neck (320), the hook (110) is pivotally connected to the upper cover (100) and is adaptive to the opening and closing rod (140), and the neck (320) is arranged at the side of the lower body (300).

In a preferred embodiment, an opening and closing torsional spring (170) is arranged between the opening and closing rod (140) and the upper cover (100).

In a preferred embodiment, the necks (320) are arranged at the two sides of the lower body (300); the hooks (110) are pivotally connected to the two sides of the upper cover (100).

In a preferred embodiment, the handle (120) is pivotally connected to the upper cover (100), and the pivot of the handle (120) is on the first plane that is vertical to the sealing piece (210) and penetrates the centre of the circle of the sealing piece (210).

In a preferred embodiment, the front end of the upper cover (100) extends downward to form a fixing part (150), and the lower end of the fixing part (150) extends forward to form a locating part (160); the front end of the rotary cover (200) is arranged between the upper cover (100) and the locating part (160), and the thickness of the front end of the rotary cover (200) is small than the distance between the upper cover (100) and the locating part (160), and a pressure spring (220) is arranged between the rotary cover (200) and the locating part (160).

In a preferred embodiment, a flicking torsional spring (500) is arranged between the lower body (300) and the rotary cover (200).

Compared with the technical proposal at the prior, the benefits of the present invention are:
1. The hook mechanism and the closing mechanism are arranged among the lower body, the rotary cover and the upper cover, so that the sealing force between the coffee box and the sealing piece is large, and the sealing performance is good, the operation is labor-saving, convenient and simple;
2. The pivot of the handle is on the first plane that is vertical to the sealing piece and penetrates the centre of the circle of the sealing piece, so that the handle is vertical to the rotary cover after the handle is pressed down, namely is provide with the same direction as the pressure generated from the coffee bag or the café capsule during the extraction process, and then the rotary cover is clamped, which will not flick during the extraction process, guaranteeing the sealing effects.
3. The cam and the handle form a synchronous coaxial rotation connection relationship, the cam is coupling with the rotary cover, so that the structure is simple;
4. The opening and closing rod (140) and the handle (120) form a synchronous coaxial rotation connection relationship, the structure is simple.

### BRIEF DESCRIPTION OF THE DRAWINGS

With the following description of the drawings and specific embodiments, the invention shall be further described in details.

FIG.1 shows the solid exploded view of the seal mechanism of high pressure coffee machine;

FIG.2 shows the front exploded view of the seal mechanism of high pressure coffee machine;

FIG.3 shows the plan view of the seal mechanism of high pressure coffee machine;

FIG.4 shows the front view of the seal mechanism of high pressure coffee machine, the seal mechanism is opened at this moment;

FIG.5 shows the front view of the seal mechanism of high pressure coffee machine, the hook is clamped to the neck;

FIG.6 shows the sectional view of FIG.3 B-B, the close state is present;

FIG.7 shows the sectional view of FIG.3 A-A, the close state is present;

FIG.8 shows the sectional view of FIG.3 C-C, the close state is present;

### DESCRIPTION OF THE PREFERRED EMBODIMENTS

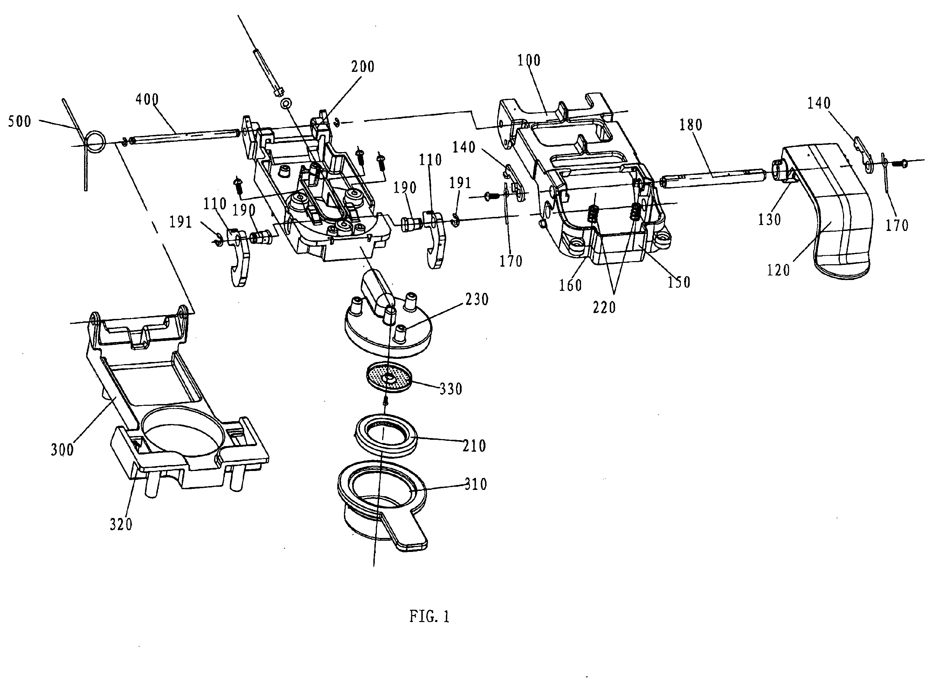

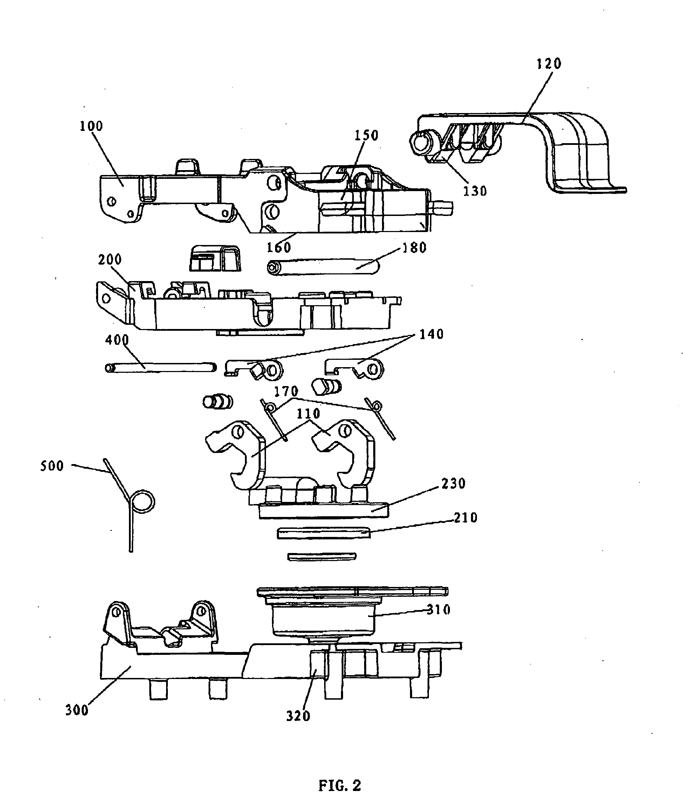

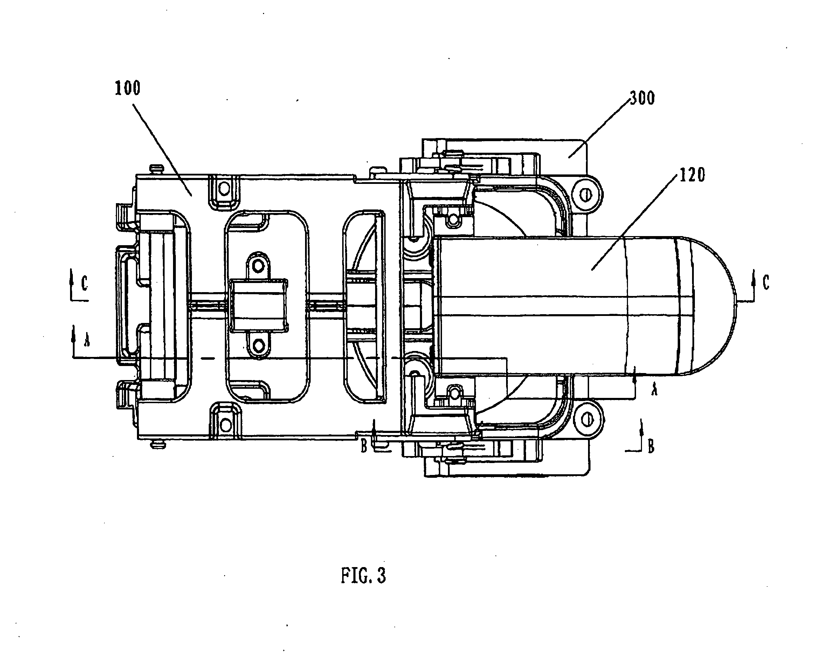

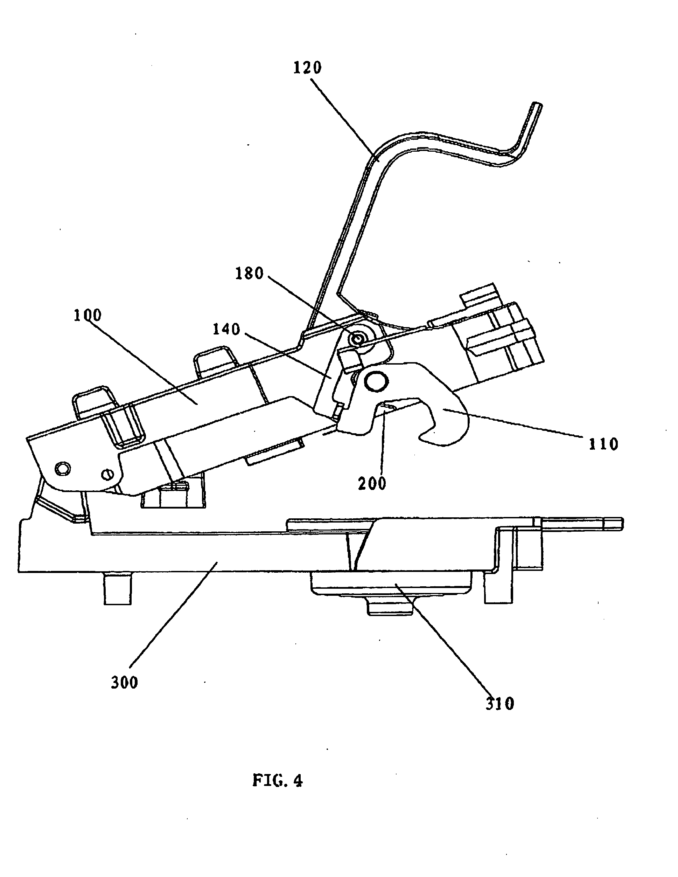

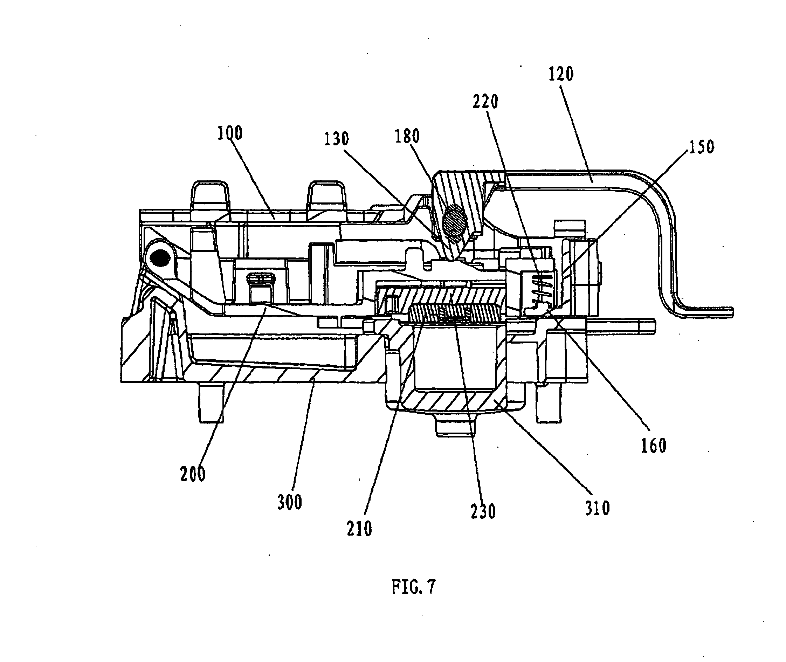

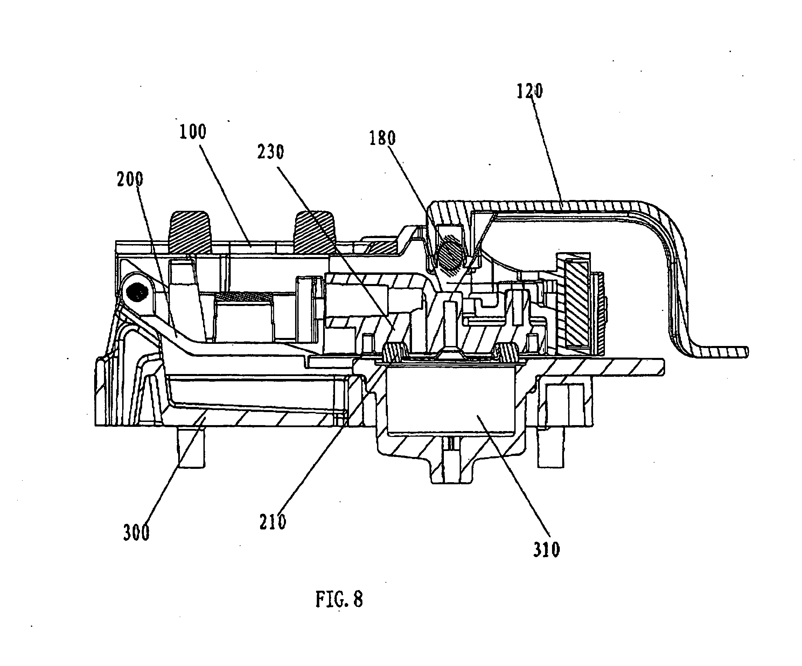

According to FIG.1 to FIG.8, a seal mechanism of high pressure coffee machine, it comprises an upper cover 100, a rotary cover 200 and a lower body 300, the back end of the upper cover 100, the back end of the rotary cover 200 and the back of the lower body 300 are pivotally connected together through the back pivot 400, and a flicking torsional spring 500 is arranged between the lower body 300 and the rotary cover 200.

A coffee box 310 with upward opening is opened at the front middle part of the lower body 300, and an extraction strainer 330 is arranged in the coffee box 310.

In the present embodiment, a groove is concavely arranged on the bottom surface of the front middle part of the rotary cover 200, and a fixator 230 is inlaid at the groove, and a sealing piece 210 that can adaptively cover the opening of the coffee box 310 is arranged on the bottom surface of the fixator 230.

The front end of the upper cover 100 extends downward to form a fixing part 150, and the lower end of the fixing part 150 extends forward to form a locating part 160; the front end of the rotary cover 200 is arranged between the upper cover 100 and the locating part 160, and the thickness of the front end of the rotary cover 200 is small than the distance between the upper cover 100 and the locating part 160, so that the front end of the rotary cover 200 can be rotated relative to the upper cover 100, and a pressure spring 220 is arranged between the rotary cover 200 and the locating part 160.

Two hook mechanisms are arranged between the upper cover 100 and the lower body 300. The hook mechanism comprises a hook 110 and a neck 320, the two necks 320 are arranged to the two sides of the lower body 300, and the two hooks 110 are pivotally connected to the two sides of the upper cover 100 through the hook shaft 190 and are located through the clamping piece 191.

A closing mechanism is arranged between the upper cover 100 and the rotary cover 200, which comprises a handle 120, a closing piece 130 and two opening and closing rods 140.

The handle 120 is pivotally connected on the front end of the upper cover 100. The closing piece 130 is a cam, and the cam and the handle 120 form a synchronous coaxial rotation connection relationship, and the peripheral surface of the cam is against the rotary cover 200, and correspondingly located above the fixator 230. As a consequence, when the handle 120 rotates relatively to the upper cover 100, it can drive the rotation of the cam, and can be against the rotary cover 200 to rotate downward, so that the sealing piece 210 is closing on the coffee box 10, or, the rotary cover 200 can be against by the pressure spring 200 to rotate upward, so that the closing between the sealing piece 210 and the coffee box 310 can be loosen. Preferably, the pivot of the handle 120 is on the first plane that is vertical to the sealing piece 210 and penetrates the centre of the circle of the sealing piece 210.

The two opening and closing rods 140 are connected to the two sides of the handle 120 respectively, and the opening and closing rod 140 and the handle 120 form a synchronous coaxial rotation connection relationship. The two opening and closing rods 140 are coupling with the two hooks 110 respectively, namely can be against the hooks 110 respectively to make the hooks reversal, and then the hook structure between the hook 110 and the neck 320 is loosen, and namely the opening and closing rod 140 and the handle 120 form a interlock connection relationship to adaptive to the hook mechanism. Preferably, an opening and closing torsional spring 170 is arranged between the opening and closing rod 140 and the upper cover 100.

In the present embodiment, the cam is fixedly connected to the handle, and the handle is fixedly connected to the handle shaft 180 and is pivotally connected to the upper cover through the handle shaft 180, and the opening and closing rod can be rotationally sleeved to the handle shaft 180 coaxially and synchronously.

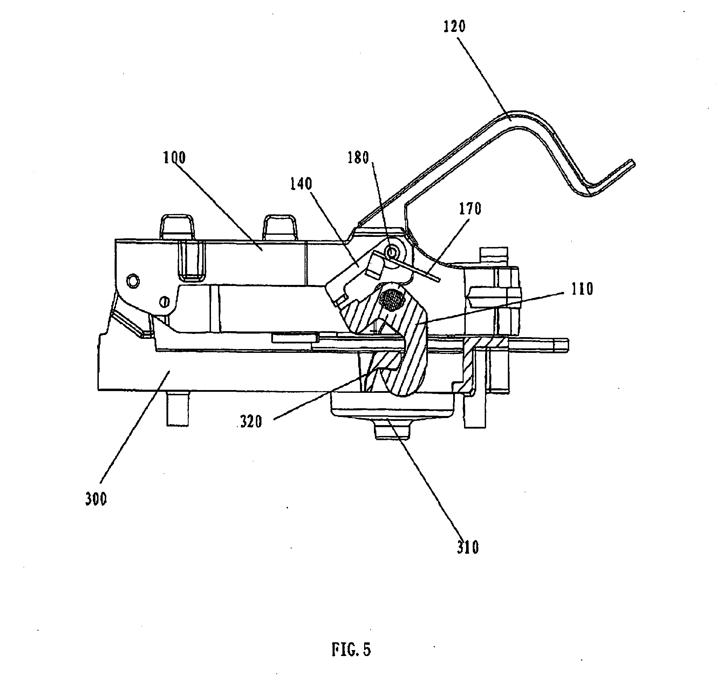

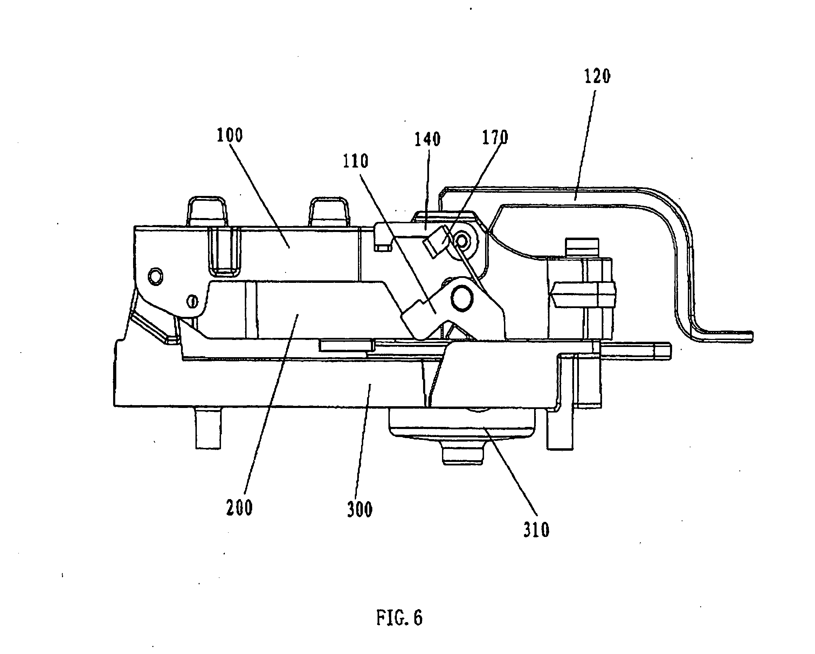

For the examiner to better understand the present embodiment, the closing procedure of the seal mechanism is described below:
1. The downward pressure is exerted to the upper cover 100, and the elastic force of the flicking torsional spring 500 is overcome, and the upper cover 100 is rotated downward, and then the hook 110 is fixedly connected on the neck 320, the sealing piece 210 is located above the coffee box 310 at this moment, but the sealing piece 210 does not contacts the coffee box 310, so the tight handfeel from the compression is not generated, according to FIG. 5;
2. The handle 120 is pressed down, and the rotary cover 200 is pressed down by the cam 130, and the elastic force of the pressure spring 220 is overcome, and the rotary cover 200 is rotated down ward, so that the complete seal of the sealing piece and the coffee box is achieved, according to FIG. 6, 7 and 8.

For the examiner to better understand the present embodiment, the opening procedure of the seal mechanism is described below:
1. The handle 120 is pulled up when opening, and the cam of the handle 120 will first release the rotary cover, and the compression of the sealing piece is released under the action of the pressure spring, and then the frictional force to the hooks and the lower body from the compression is decreased;
2. Then the handle 120 is pulled up again, the opening and closing rod fixedly connected to the two sides of the handle 120 will push the hooks down, so that the hooks quit from the lower body, then the opening action is achieved.

The invention has been described with reference to the preferred embodiments mentioned above; therefore it cannot limit the reference implementation of the invention. It is obvious to a person skilled in the art that structural modification and changes can be carried out without leaving the scope of the claims hereinafter and the description above.

### INDUSTRIAL APPLICABILITY

The seal mechanism of high pressure coffee machine in the present embodiment, a hook mechanism and a closing mechanism are arranged among the lower body, the rotary cover and the upper cover, so that the sealing force between the coffee box and the sealing piece is large, the sealing performance is good, the operation is labor-saving, convenient and simple, so the present invention is provided with good industrial applicability.

## Claims

1. A seal mechanism of high pressure coffee machine, which comprises an upper cover (100), a rotary cover (200) and a lower body (300), the back end of the upper cover (100), the back end of the rotary cover (200) and the back of the lower body (300) are pivotally connected together, a coffee box (310) with upward opening is arranged on the lower body (300), and a sealing piece (210) that can adaptively cover the opening of the coffee box (310) is arranged under the rotary cover (200);
wherein the hook mechanism is arranged between the upper cover (100) and the lower body (300);
wherein the closing mechanism is arranged between the upper cover (100) and the rotary cover (200), wherein it comprises the handle (120), the closing piece (130) and the opening and closing rod (140); the handle (120) is moveably connected to the upper cover (100), the closing piece (130) and the handle (120) form an interlock connection relationship and are against above the rotary cover (200), and the opening and closing rod (140) and the handle (120) form a interlock connection relationship to be adaptive to the hook mechanism.

2. A seal mechanism of high pressure coffee machine according to claim 1, wherein, the closing piece (130) is a cam, and the cam and the handle (120) form a synchronous coaxial rotation connection relationship, and the peripheral surface of the cam is against the rotary cover (200).

3. A seal mechanism of high pressure coffee machine according to claim 1, wherein, the opening and closing rod (140) and the handle (120) form a synchronous coaxial rotation connection relationship.

4. A seal mechanism of high pressure coffee machine according to claim 1, wherein, the hook mechanism comprises the hook (110) and the neck (320), the hook (110) is pivotally connected to the upper cover (100) and is adaptive to the opening and closing rod (140), and the neck (320) is arranged at the side of the lower body (300).

5. A seal mechanism of high pressure coffee machine according to claim 3, wherein, an opening and closing torsional spring (170) is arranged between the opening and closing rod (140) and the upper cover (100).

6. A seal mechanism of high pressure coffee machine according to claim 4, wherein, the necks (320) are arranged at the two sides of the lower body (300); the hooks (110) are pivotally connected to the two sides of the upper cover (100).

7. A seal mechanism of high pressure coffee machine according to claim 1, 2, 3, 4, 5 or 6, wherein, the handle (120) is pivotally connected to the upper cover (100), and the pivot of the handle (120) is on the first plane that is vertical to the sealing piece (210) and penetrates the centre of the circle of the sealing piece (210).

8. A seal mechanism of high pressure coffee machine according to claim 1, 2, 3, 4, 5 or 6, wherein, the front end of the upper cover (100) extends downward to form a fixing part (150), and the lower end of the fixing part (150) extends forward to form a locating part (160); the front end of the rotary cover (200) is arranged between the upper cover (100) and the locating part (160), and the thickness of the front end of the rotary cover (200) is small than the distance between the upper cover (100) and the locating part (160), and a pressure spring (220) is arranged between the rotary cover (200) and the locating part (160).

9. A seal mechanism of high pressure coffee machine according to claim 1, 2, 3, 4, 5 or 6, wherein, a flicking torsional spring (500) is arranged between the lower body (300) and the rotary cover (200).

## Patentansprüche

1. Dichtungsmechanismus einer Hochdruckkaffeemaschine, der eine obere Abdeckung (100), eine drehbare Abdeckung (200) und einen unteren Körper (300) aufweist, wobei das hintere Ende der oberen Abdeckung (100), das hintere Ende der drehbaren Abdeckung (200) und die Rückseite des unteren Körpers (300) schwenkbar miteinander verbunden sind, wobei eine Kaffeedose (310) mit einer nach oben gewandten Öffnung auf dem unteren Körper (300) angeordnet ist, und ein Dichtungsstück (210), das die Öffnung der Kaffeedose (310) anpassungsfähig bedecken kann, unter der drehbaren Abdeckung (200) angeordnet ist;
wobei der Hakenmechanismus zwischen der oberen Abdeckung (100) und der unteren Abdeckung (300) angeordnet ist;
wobei der Schließmechanismus zwischen der oberen Abdeckung (100) und der drehbaren Abdeckung (200) angeordnet ist, wobei er den Griff (120), das Schließstück (130) und den Öffnungs- und Schließstab (140) aufweist; wobei der Griff (120) beweglich mit der oberen Abdeckung (100) verbunden ist, wobei das Schließstück (130) und der Griff eine Verriegelungsverbindungsbeziehung bilden und oberhalb der drehbaren Abdeckung (200) anliegen und der Öffnungs- und Schließstab (140) und der Griff (120) eine Verriegelungsverbindungsbeziehung bilden, so dass sie an den Hakenmechanismus anpassbar sind.

2. Dichtungsmechanismus einer Hochdruckkaffeemaschine nach Anspruch 1, wobei das Schließstück (130) eine Nocke ist und die Nocke und der Griff (120) eine synchrone koaxiale Drehverbindungsbeziehung bilden, und die Umfangsoberfläche der Nocke an der drehbaren Abdeckung (200) anliegt.

3. Dichtungsmechanismus einer Hochdruckkaffeemaschine nach Anspruch 1, wobei der Öffnungs- und Schließstab (140) und der Griff (120) eine synchrone koaxiale Drehverbindungsbeziehung bilden.

4. Dichtungsmechanismus einer Hochdruckkaffeemaschine nach Anspruch 1, wobei der Hakenmechanismus den Haken (110) und den Ansatz (320) aufweist, wobei der Haken (110) schwenkbar mit der oberen Abdeckung (100) verbunden ist und an den Öff nungs- und Schließstab (140) anpassbar ist, und der Ansatz (320) an der Seite des unteren Körpers (300) angeordnet ist.

5. Dichtungsmechanismus einer Hochdruckkaffeemaschine nach Anspruch 3, wobei eine Öffnungs- und Schließtorsionsfeder (170) zwischen dem Öffnungs- und Schließstab (140) und der oberen Abdeckung (100) angeordnet ist.

6. Dichtungsmechanismus einer Hochdruckkaffeemaschine nach Anspruch 4, wobei die Ansätze (320) an den zwei Seiten des unteren Körpers (300) angeordnet sind, wobei die Haken (110) schwenkbar mit den zwei Seiten der oberen Abdeckung (100) verbunden sind.

7. Dichtungsmechanismus einer Hochdruckkaffeemaschine nach Anspruch 1, 2, 3, 4, 4, 5 oder 6, wobei der Griff (120) schwenkbar mit der oberen Abdeckung (100) verbunden ist und die Drehachse des Griffs (120) auf der ersten Ebene ist, die vertikal zu dem Dichtungsstück (210) ist und die Mitte des Kreises des Dichtungsstücks (210) durchdringt.

8. Dichtungsmechanismus einer Hochdruckkaffeemaschine nach Anspruch 1, 2, 3, 4, 5 oder 6, wobei das vordere Ende der oberen Abdeckung (100) sich abwärts erstreckt, um einen Befestigungsteil (150) zu bilden, und das untere Ende des Befestigungsteils (150) sich nach vom erstreckt, um einen Zentrierteil (160) zu bilden; wobei das vordere Ende der drehbaren Abdeckung (200) zwischen der oberen Abdeckung (100) und dem Zentrierteil (160) angeordnet ist, und die Dicke des vorderen Endes der drehbaren Abdeckung (200) kleiner als der Abstand zwischen der oberen Abdeckung (100) und dem Zentrierteil (160) ist und eine Druckfeder (22) zwischen der drehbaren Abdeckung (200) und dem Zentrierteil (160) angeordnet ist.

9. Dichtungsmechanismus einer Hochdruckkaffeemaschine nach Anspruch 1, 2, 3, 4, 5 oder 6, wobei eine schnalzende Torsionsfeder (500) zwischen dem unteren Körper (300) und der drehbaren Abdeckung (200) angeordnet ist.

## Revendications

1. Mécanisme d'étanchéité de machine à café à haute pression, qui comprend un couvercle supérieur (100), un couvercle rotatif (200) et un corps inférieur (300), l'extrémité arrière du couvercle supérieur (100), l'extrémité arrière du couvercle rotatif (200) et l'arrière du corps inférieur (300) étant reliés de manière pivotante, un boîtier à café (310) pourvu d'une ouverture dirigée vers le haut étant disposé sur le corps inférieur (300), et une pièce d'étanchéité (210), qui peut couvrir de manière adaptable l'ouverture du boîtier à café (310), est disposée sous le couvercle rotatif (200) ;
dans lequel le mécanisme d'accrochage est disposé entre le couvercle supérieur (100) et le corps inférieur (300) ;
dans lequel le mécanisme de fermeture est disposé entre le couvercle supérieur (100) et le couvercle rotatif (200), étant précisé qu'il comprend la poignée (120), la pièce de fermeture (130) et la tige d'ouverture et de fermeture (140) ; que la poignée (120) est reliée, mobile, au couvercle supérieur (100), que la pièce de fermeture (130) et la poignée (120) forment une relation de liaison d'emboîtement et se trouvent contre et sur le couvercle rotatif (200), et que la tige d'ouverture et de fermeture (140) et la poignée (120) forment une relation de liaison d'emboîtement pour s'adapter au mécanisme d'accrochage.

2. Mécanisme d'étanchéité de machine à café à haute pression selon la revendication 1, dans lequel la pièce de fermeture (130) est une saillie, la saillie et la poignée (120) forment une relation de liaison à rotation coaxiale synchrone, et la surface périphérique de la saillie se trouve contre le couvercle rotatif (200).

3. Mécanisme d'étanchéité de machine à café à haute pression selon la revendication 1, dans lequel la tige d'ouverture et de fermeture (140) et la poignée (120) forment une relation de liaison à rotation coaxiale synchrone.

4. Mécanisme d'étanchéité de machine à café à haute pression selon la revendication 1, dans lequel le mécanisme d'accrochage comprend le crochet (110) et le rebord (320), le crochet (110) est relié de manière pivotante au couvercle supérieur (100) et s'adapte à la tige d'ouverture et de fermeture (140), et le rebord (320) est disposé sur le côté du corps inférieur (300).

5. Mécanisme d'étanchéité de machine à café à haute pression selon la revendication 3, dans lequel un ressort de torsion d'ouverture et de fermeture (170) est disposé entre la tige d'ouverture et de fermeture (140) et le couvercle supérieur (100).

6. Mécanisme d'étanchéité de machine à café à haute pression selon la revendication 4, dans lequel les rebords (320) sont disposés des deux côtés du corps inférieur (300) ; et les crochets (110) sont reliés de manière pivotante aux deux côtés du couvercle supérieur (100).

7. Mécanisme d'étanchéité de machine à café à haute pression selon la revendication 1, 2, 3, 4, 5 ou 6, dans lequel la poignée (120) est reliée de manière pivotante au couvercle supérieur (100) et le pivot de la poignée (120) se trouve sur le premier plan qui est vertical par rapport à la pièce d'étanchéité (210) et qui pénètre dans le centre du cercle de ladite pièce d'étanchéité (210).

8. Mécanisme d'étanchéité de machine à café à haute pression selon la revendication 1, 2, 3, 4, 5 ou 6, dans lequel l'extrémité avant du couvercle supérieur (100) s'étend vers le bas pour former une pièce de fixation (150), et l'extrémité inférieure de la pièce de fixation (150) s'étend vers l'avant pour former une pièce de positionnement (160) ; l'extrémité avant du couvercle rotatif (200) est disposée entre le couvercle supérieur (100) et la pièce de positionnement, l'épaisseur de l'extrémité avant du couvercle rotatif (200) est inférieure à la distance entre le couvercle supérieur (100) et la pièce de positionnement (160), et un ressort de pression (220) est disposé entre le couvercle rotatif (200) et la pièce de positionnement (160).

9. Mécanisme d'étanchéité de machine à café à haute pression selon la revendication 1, 2, 3, 4, 5 ou 6, dans lequel un ressort de torsion d'enclenchement (500) est disposé entre le corps inférieur (300) et le couvercle rotatif (200).
